# EUROPEAN PATENT APPLICATION

(11) **EP 4 738 446 A1**
(43) Date of publication of application: **06.05.2026**
(21) Application number: 25833297.2
(22) Date of filing: 26.06.2025
(51) Int. Cl.: H01M 4/04, B65H 16/06, B65H 35/06, B26D 7/30, B26D 7/32

(54) **ELECTRODE DISCARDING DEVICE**

(30) Priority: 04.07.2024 KR 20240088109
(71) Applicant: LG Energy Solution, Ltd., Seoul 07335 (KR)
(72) Inventor: PARK, Myung Chan, Daejeon 34122 (KR); SON, Jae Hyoung, Daejeon 34122 (KR); SHIN, Sung Jong, Daejeon 34122 (KR); KO, Seong Beom, Daejeon 34122 (KR); LEE, Chan Yang, Daejeon 34122 (KR); HAM, Hyeong Joo, Daejeon 34122 (KR)
(74) Representative: Plasseraud IP
(86) International application number: PCT/KR2025/008983
(87) International publication number: WO 2026/010238

(57) **Abstract**

The technical idea of the present disclosure provides an electrode disposal apparatus including: a holder including a holding block configured to support a side portion of a bobbin on which an electrode sheet is wound and configured to rotate the bobbin such that the electrode sheet is unwound from the bobbin; a cutter configured to cut a portion of the electrode sheet unwound from the bobbin; and a disposal box accommodating segments of the electrode sheet cut by the cutter, wherein the holding block comprises: a rotation block; and a first connection blade extending in a first direction perpendicular to a rotation axis of the rotation block and inserted into a first insertion groove of the bobbin.

## Description

### [Technical Field]

The present disclosure relates to an electrode disposal apparatus.

This application claims the benefit of priority from Korean Patent Application No. 10-2024-0088109, filed on July 04, 2024, the entire contents disclosed therein are incorporated by reference into this disclosure.

### [Background]

With the development of technology and increase in demand for mobile devices, the demand for secondary batteries is also rapidly increasing. Among them, lithium secondary batteries are widely used as energy sources for various mobile devices as well as various electronic products because they have high energy density and operating voltage and excellent storage and lifespan characteristics. Recently, as the application field for secondary batteries has expanded, demand for higher capacity secondary batteries is rapidly increasing.

The process for manufacturing electrode of secondary batteries includes a coating process of manufacturing an electrode sheet by coating electrode active material on a current collector, a roll pressing process of pressing the electrode sheet, a slitting process and a notching process of cutting the electrode sheet into predetermined dimensions and shapes. At each individual process, a remainder of the electrode sheet is generated, and a disposal operation is performed to dispose of the remainder of the electrode sheet.

### [Summary]

### [Technical Problem]

The technical problem to be solved by the present disclosure is to provide an electrode disposal apparatus.

### [Technical Solution]

To solve the above-described problem, the technical idea of the present disclosure provides an electrode disposal apparatus comprising: a holder including a holding block configured to support a side portion of a bobbin on which an electrode sheet is wound and configured to rotate the bobbin such that the electrode sheet is unwound from the bobbin; a cutter configured to cut a portion of the electrode sheet unwound from the bobbin; and a disposal box accommodating segments of the electrode sheet cut by the cutter, wherein the holding block comprises: a rotation block; and a first connection blade extending in a first direction perpendicular to a rotation axis of the rotation block and inserted into a first insertion groove of the bobbin.

In exemplary embodiments, the holding block further comprises a second connection blade extending in a second direction perpendicular to the rotation axis of the rotation block and different from the first direction and inserted into a second insertion groove of the bobbin.

In exemplary embodiments, the holding block further comprises a contact pad accommodated in a hole of the first connection blade and in contact with the bobbin.

In exemplary embodiments, the holder is configured to move the contact pad to adjust a height at which the contact pad protrudes from the first connection blade.

In exemplary embodiments, the contact pad comprises rubber.

In exemplary embodiments, the holder is configured to move the holding block between a working position and a standby position, wherein at the working position, the holding block supports the bobbin, and wherein at the standby position, the holding block is spaced apart from the bobbin.

In exemplary embodiments, the electrode disposal apparatus further comprises a scale coupled to the disposal box and configured to detect a weight of the disposal box.

In exemplary embodiments, the electrode disposal apparatus further comprises a transfer device configured to move the disposal box and the scale.

In exemplary embodiments, the electrode disposal apparatus further comprises: a scale coupled to the disposal box and configured to detect a weight of the disposal box; and a transfer device configured to move the disposal box and the scale, wherein the transfer device is configured to move the disposal box and the scale to a disposal position when the weight of the disposal box detected by the scale exceeds a reference weight.

In exemplary embodiments, the electrode disposal apparatus further comprises a touch roll in contact with the electrode sheet wound on the bobbin.

In exemplary embodiments, the cutter comprises a support part supporting a portion of the electrode sheet unwound from the bobbin and a cutting knife configured to cut the electrode sheet while the support part supports the electrode sheet.

### [Advantageous Effects]

According to the electrode manufacturing apparatus according to exemplary embodiments, since the electrode disposal process can be automated, productivity of the electrode disposal process can be improved, and safety issues of operators and accidents can be prevented.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a configuration diagram illustrating an electrode disposal apparatus according to exemplary embodiments of the present disclosure.
FIG. 2a to FIG. 2e are configuration diagrams illustrating an electrode disposal method according to exemplary embodiments of the present disclosure.
FIG. 3 is a configuration diagram illustrating an electrode disposal apparatus according to exemplary embodiments of the present disclosure.
FIG. 4 is a perspective view illustrating a holding block of a holder according to exemplary embodiments of the present disclosure.
FIG. 5 is a side view illustrating a bobbin.
FIG. 6 is a perspective view illustrating a holding block of a holder according to exemplary embodiments of the present disclosure.
FIG. 7 is a perspective view illustrating a holding block of a holder according to exemplary embodiments of the present disclosure.
FIG. 8 is a perspective view illustrating a holder according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of filing the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

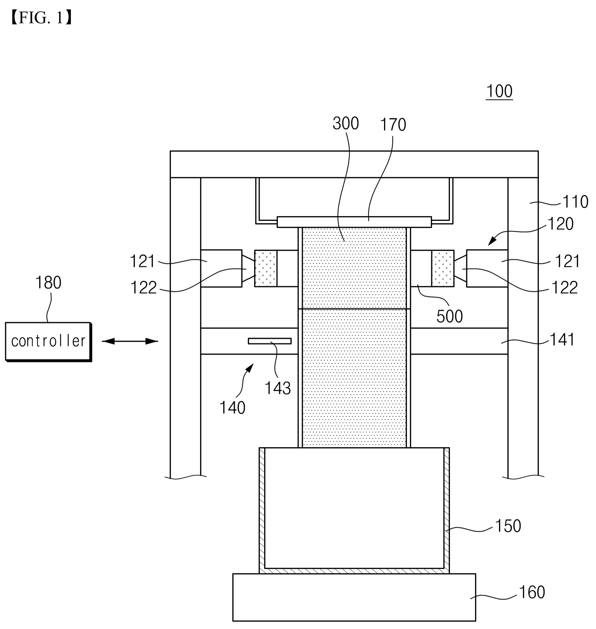

FIG. 1 is a configuration diagram illustrating an electrode disposal apparatus 100 according to exemplary embodiments of the present disclosure.

Referring to FIG. 1, the electrode disposal apparatus 100 may perform a disposal operation on an electrode sheet 300 provided wound on a bobbin 500. The electrode sheet 300 may correspond to a semi-finished product for manufacturing an electrode for a secondary battery. The electrode sheet 300 may include a current collector and an electrode slurry layer coated on the current collector. The electrode sheet 300 may be carried into the electrode disposal apparatus 100 in a state of being wound on the bobbin 500 having a cylindrical shape. The disposal operation on the electrode sheet 300 may include cutting and separating the electrode sheet 300 remaining on the bobbin 500 after the electrode manufacturing process into a plurality of segments 310, and collecting and disposing the plurality of segments 310 of the electrode sheet 300 in a disposal box 150.

The electrode disposal apparatus 100 may include a frame 110, a holder 120, a cutter 140, a disposal box 150, a scale 160, a touch roll 170, and a controller 180.

The frame 110 may support components of the electrode disposal apparatus 100 such as the holder 120, the cutter 140, and the touch roll 170.

The holder 120 may support the bobbin 500 and may be configured to rotate the bobbin 500 such that the electrode sheet 300 is unwound from the bobbin 500. A rotation axis direction of the bobbin 500 may be parallel to a horizontal direction, and the electrode sheet 300 unwound from the bobbin 500 may fall in a vertical direction.

The holder 120 may include a pair of holding blocks 121 supporting both side portions of the bobbin 500. One of the pair of holding blocks 121 may support one side portion of the bobbin 500, and the other one of the pair of holding blocks 121 may support the other side portion of the bobbin 500.

The holder 120 may include an actuator configured to move at least one of the pair of holding blocks 121 in a horizontal direction. At least one of the pair of holding blocks 121 may be mounted on the frame 110 so as to be movable in a horizontal direction. The holder 120 may move at least one of the pair of holding blocks 121 in a horizontal direction between a working position and a standby position. At the working position, the pair of holding blocks 121 may each be engaged with the bobbin 500 to support the bobbin 500. At the standby position, at least one of the pair of holding blocks 121 may be spaced apart from the bobbin 500. A distance between the pair of holding blocks 121 at the standby position may be greater than a distance between the pair of holding blocks 121 at the working position. When the pair of holding blocks 121 are at the standby position, the bobbin 500 may be loaded into the electrode disposal apparatus 100 or the bobbin 500 may be unloaded from the electrode disposal apparatus 100.

Each individual holding block 121 may include a rotation block 122 configured to rotate about a rotation axis and a rotation actuator configured to rotate the rotation block 122. A rotation axis direction of the rotation block 122 may be parallel to a rotation axis direction of the bobbin 500. For example, the rotation axis direction of the rotation block 122 may be parallel to a horizontal direction. In a state where the bobbin 500 is supported by the holding blocks 121, by rotating at least one of the rotation blocks 122 of the holding blocks 121, the bobbin 500 may be rotated such that the electrode sheet 300 is unwound from the bobbin 500.

The cutter 140 may be disposed below the holder 120. The cutter 140 may be configured to cut a portion of the electrode sheet 300 unwound from the bobbin 500. The cutter 140 may cut the electrode sheet 300 to separate the electrode sheet 300 into a plurality of segments 310.

The cutter 140 may include a cutter frame 141, a cutting knife 143, and a support part 145. The cutter frame 141 may be coupled to the frame 110. The cutting knife 143 may cut the electrode sheet 300. The cutting knife 143 may be movably mounted on the cutter frame 141, and movement of the cutting knife 143 may be controlled by an actuator provided in the cutter 140. The support part 145 may support a portion of the electrode sheet 300 unwound from the bobbin 500. For example, the support part 145 may be mounted on the cutter frame 141 and may be configured to adsorb and support a portion of the electrode sheet 300 to the cutter frame 141. The support part 145 may include a suction pump providing suction force for suctioning a portion of the electrode sheet 300. While the support part 145 is supporting a portion of the electrode sheet 300, the cutting knife 143 may move in a horizontal direction to cut the electrode sheet 300.

In exemplary embodiments, the cutting knife 143 may be configured to move between a standby position where the entirety thereof is located inside the cutter frame 141 and a working position where at least a portion of the cutting knife 143 protrudes outward from the cutter frame 141. The cutting knife 143 may protrude from the cutter frame 141 while a cutting operation on the electrode sheet 300 is performed. At a time when a cutting operation on the electrode sheet 300 is not performed, the cutting knife 143 may be located at the standby position embedded in the cutter frame 141.

The disposal box 150 may be disposed below the cutter 140. The disposal box 150 may accommodate a plurality of segments 310 separated from the electrode sheet 300. When the cutter 140 cuts the electrode sheet 300, the segment 310 of the electrode sheet 300 may fall freely and be collected in the disposal box 150.

The scale 160 may support the disposal box 150 and may be configured to detect a weight of the disposal box 150. The scale 160 may be coupled to the disposal box 150 and may move together when the disposal box 150 moves. The weight of the disposal box 150 detected by the scale 160 may refer to a weight of the segments 310 of the electrode sheet 300 collected in the disposal box 150 or a sum of a weight of the disposal box 150 and a weight of the segments 310 of the electrode sheet 300 collected in the disposal box 150.

The touch roll 170 may contact the electrode sheet 300 wound on the bobbin 500 and may be configured to rotate or roll in a state of being in contact with the electrode sheet 300. The touch roll 170 uniformly presses the electrode sheet 300 in a width direction of the electrode sheet 300 so that the electrode sheet 300 is smoothly unwound from the bobbin 500.

The controller 180 may be connected to components of the electrode disposal apparatus 100 so as to be capable of transmitting signals. The controller 180 may control operations of the components of the electrode disposal apparatus 100 to control an electrode disposal process using the electrode disposal apparatus 100. The controller 180 may include a power supply, a CPU, an input interface, an output interface, a communication interface, and memory devices. For operation of the controller 180, the controller 180 may be configured to supply power to other elements of the controller 180 such as the CPU, the input interface, the output interface, the communication interface, and the memory devices. The memory devices may include a ROM (Read Only Memory) configured to store system programs such as an operating system and a RAM (Random Access Memory) configured to store data such as user programs, status information of input and output devices, and values of timers, counters, and other internal devices. The CPU may be configured to implement logic and control communication between modules that convert input signals into output operation signals. The CPU may operate based on system programs and user programs stored in the memory devices. The CPU may be configured to write or read inspection data and measurement data in a data area of the memory devices based on the system programs and user programs. Conditions or data of industrial devices and production processes may be transmitted to the CPU through the input module. Results processed by the CPU may be transmitted to actuators through the output module. However, the controller 180 is not limited thereto and may include any one of a simple controller; a complex processor such as a microprocessor, a CPU, and a GPU; a processor configured by software; dedicated hardware; and firmware. The controller 180 may be implemented, for example, by a general-purpose computer or application-specific hardware such as a DSP, an FPGA, and an ASIC.

### (second embodiment)

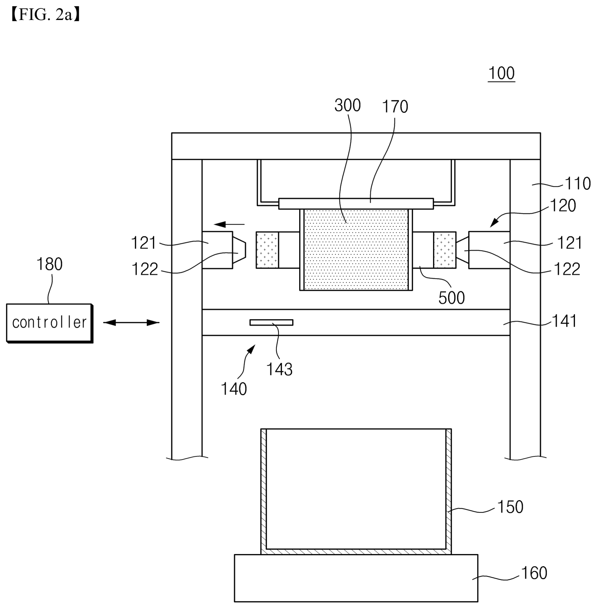

FIG. 2a to FIG. 2e are configuration diagrams illustrating an electrode disposal method according to exemplary embodiments of the present disclosure. Hereinafter, an exemplary electrode disposal method using the electrode disposal apparatus 100 of FIG. 1 will be described with reference to FIG. 2a to FIG. 2e.

Referring to FIG. 2a, the pair of holding blocks 121 are positioned at a standby position, and the bobbin 500 is coupled to one of the pair of holding blocks 121 while the pair of holding blocks 121 are positioned at the standby position.

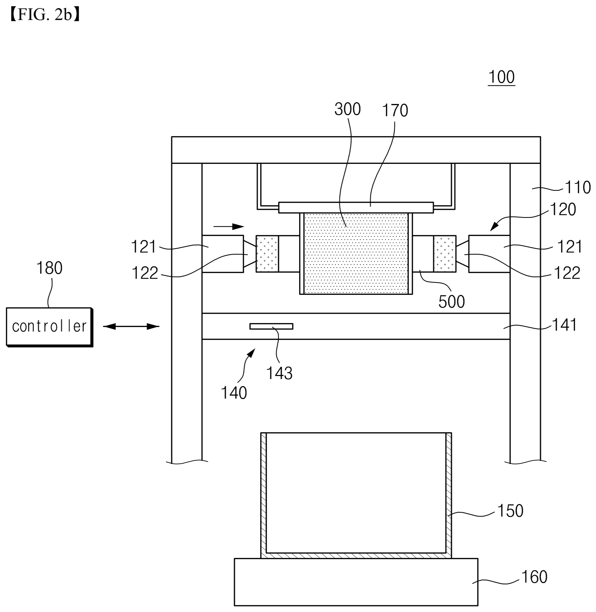

Referring to FIG. 2b, the pair of holding blocks 121 are moved from the standby position to a working position. For example, the holding block 121 not coupled to the bobbin 500 among the pair of holding blocks 121 is moved in a horizontal direction so that the holding block 121 is in close contact with the bobbin 500. When the pair of holding blocks 121 are positioned at the working position, both side portions of the bobbin 500 may be supported by the pair of holding blocks 121.

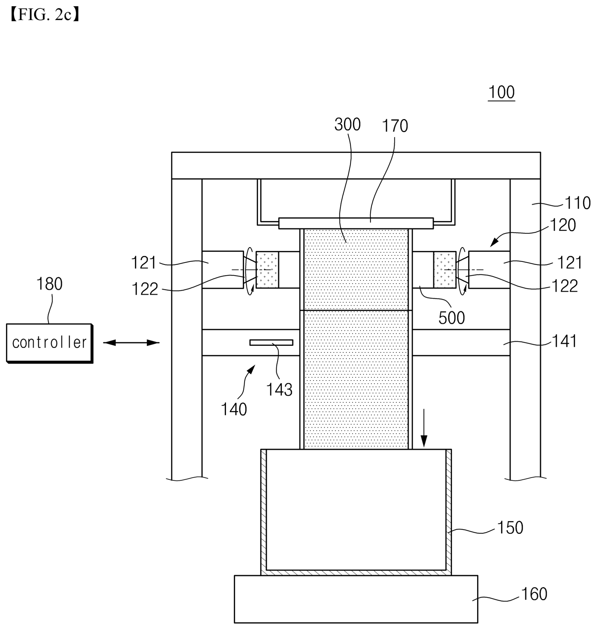

Referring to FIG. 2c, in a state where the bobbin 500 is supported by the pair of holding blocks 121, at least one of the rotation blocks 122 of the pair of holding blocks 121 is rotated to rotate the bobbin 500. When the bobbin 500 is rotated, a portion of the electrode sheet 300 unwound from the bobbin 500 falls toward the disposal box 150.

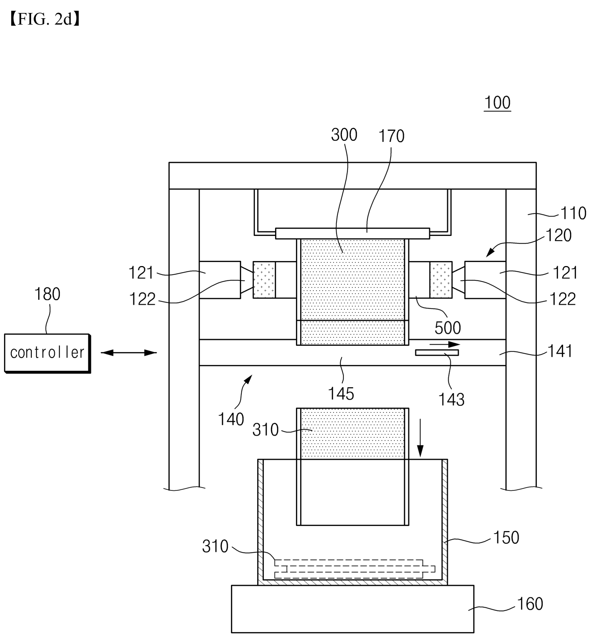

Referring to FIG. 2d, a portion of the electrode sheet 300 unwound from the bobbin 500 is cut by the cutter 140. While the support part 145 of the cutter 140 is adsorbing and supporting a portion of the electrode sheet 300, the cutting knife 143 moves in a horizontal direction to cut the electrode sheet 300.

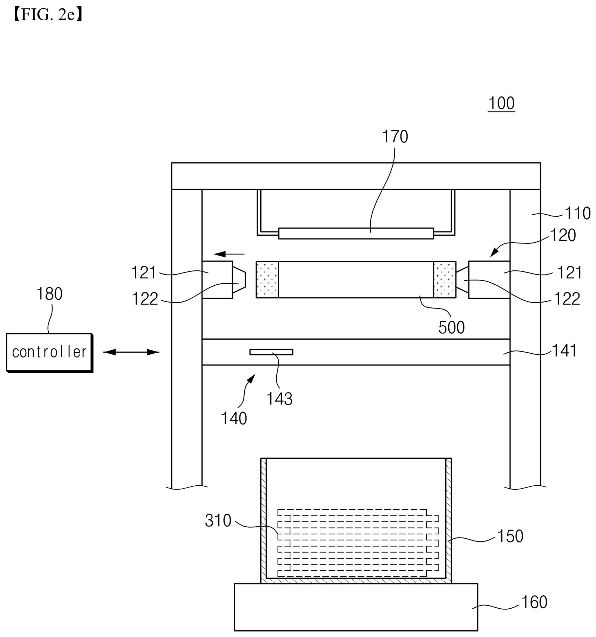

Referring to FIG. 2d and FIG. 2e, by repeating a step of dropping the electrode sheet 300 by a predetermined length and a step of cutting the electrode sheet 300 several times, the electrode sheet 300 is separated into a plurality of segments 310. The plurality of segments 310 of the electrode sheet 300 fall freely and are collected in the disposal box 150.

Next, when all of the electrode sheet 300 is collected in the disposal box 150, the pair of holding blocks 121 are moved from the working position to the standby position, and the bobbin 500 is unloaded from the holder 120.

### (third embodiment)

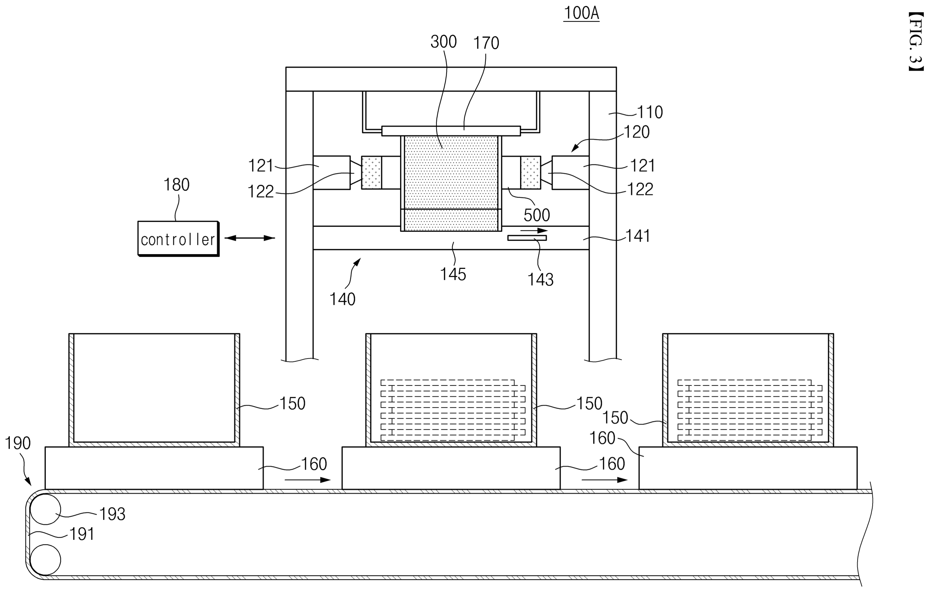

FIG. 3 is a configuration diagram illustrating an electrode disposal apparatus 100A according to exemplary embodiments of the present disclosure. Hereinafter, the electrode disposal apparatus 100A of FIG. 3 will be described focusing on differences from the electrode disposal apparatus 100 of FIG. 1.

Referring to FIG. 3, the electrode disposal apparatus 100A may include a transfer device 190 configured to transfer the disposal box 150 and the scale 160 along a predetermined transfer path. The disposal box 150 and the scale 160 coupled to each other are transferred together by the transfer device 190. In exemplary embodiments, the transfer device 190 may be a conveyor transfer device including a conveyor belt 191 and a plurality of rollers 193. The plurality of rollers 193 may include a drive roller configured to move the conveyor belt 191 and a guide roller guiding movement of the conveyor belt 191. The disposal box 150 and the scale 160 are seated on the conveyor belt 191 and may move by movement of the conveyor belt 191.

The transfer device 190 may be configured to move the disposal box 150 among a standby position, a working position, and a disposal position. The standby position is a position where an empty disposal box 150 stands by. The working position is a position below the holder 120 and the cutter 140 and for collecting the plurality of segments 310 of the electrode sheet 300 cut by the cutter 140 into the disposal box 150. The disposal box 150 filled with the plurality of segments 310 of the electrode sheet 300 by an appropriate weight is transferred to the disposal position. The standby position, the working position, and the disposal position are sequentially disposed along a transfer path of the transfer device 190.

In exemplary embodiments, the scale 160 may detect a weight of the disposal box 150 and may transmit a weight signal regarding the weight of the disposal box 150 to the controller 180. The controller 180 may control an operation of the electrode disposal apparatus 100A based on the weight signal transmitted from the scale 160.

In exemplary embodiments, the controller 180 may determine whether the weight of the disposal box 150 exceeds a reference weight based on the weight signal transmitted from the scale 160. When it is determined that the weight of the disposal box 150 exceeds the reference weight, the controller 180 may stop operations of the holder 120 and the cutter 140 and operate the transfer device 190 to move the disposal box 150 from the working position to the disposal position.

### (fourth embodiment)

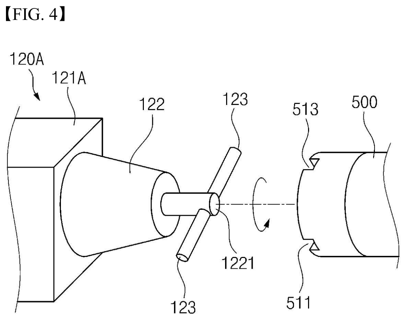

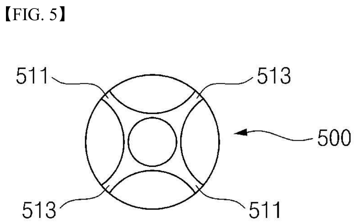

FIG. 4 is a perspective view illustrating a holding block 121A of a holder 120A according to exemplary embodiments of the present disclosure. FIG. 5 is a side view illustrating a bobbin 500.

Referring to FIG. 4 and FIG. 5 together with FIG. 1, the bobbin 500 may include a first insertion groove 511 and a second insertion groove 513 on a side portion. The first insertion groove 511 and the second insertion groove 513 may each extend in a radial direction from a central axis of the bobbin 500. That is, the first insertion groove 511 and the second insertion groove 513 may each extend in a radial direction from a center of a side surface of the bobbin 500. The first insertion groove 511 may extend in a first direction perpendicular to a rotation axis direction of the rotation block 122, and the second insertion groove 513 may extend in a second direction perpendicular to the rotation axis direction of the rotation block 122. For example, the first direction and the second direction may be perpendicular to each other.

The holding block 121A may include a first connection blade 123 connected to an end 1221 of the rotation block 122. The first connection blade 123 may extend in a first direction perpendicular to a rotation axis direction of the rotation block 122. The first connection blade 123 may be inserted into the first insertion groove 511 of the bobbin 500. The holding block 121A may include a pair of first connection blades 123 connected to the end 1221 of the rotation block 122, and the pair of first connection blades 123 may each be inserted into each of the first insertion grooves 511 of the bobbin 500.

As the first connection blade 123 of the holding block 121A is inserted into the first insertion groove 511 of the bobbin 500, the bobbin 500 may be engaged with and supported by the holding block 121A. While the bobbin 500 is supported by the holding block 121A with the first connection blade 123 of the holding block 121A inserted into the first insertion groove 511 of the bobbin 500, when the rotation block 122 is rotated, the bobbin 500 is rotated so that the electrode sheet 300 may be unwound from the bobbin 500.

Since the holder 120A supports the bobbin 500 by inserting the connection blade of the holding block 121A into the insertion groove of the bobbin 500, the holder 120A may be universally applied to bobbins 500 having various dimensions.

### (fifth embodiment)

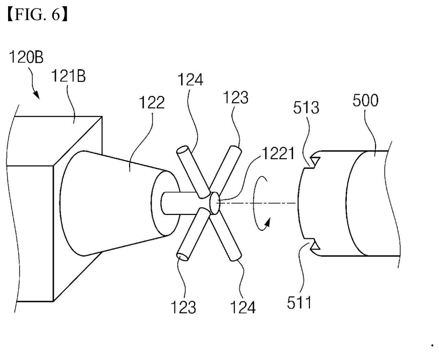

FIG. 6 is a perspective view illustrating a holding block 121B of a holder 120B according to exemplary embodiments of the present disclosure. Hereinafter, the holding block 121B of the holder 120B of FIG. 6 will be described focusing on differences from the holding block 121A of the holder 120A described with reference to FIG. 4.

Referring to FIG. 5 and FIG. 6, the holding block 121B may include a second connection blade 124 connected to the end 1221 of the rotation block 122. The second connection blade 124 may extend in a second direction perpendicular to a rotation axis direction of the rotation block 122. The second connection blade 124 may be inserted into the second insertion groove 513 of the bobbin 500. The holding block 121B may include a pair of second connection blades 124 connected to the end 1221 of the rotation block 122, and the pair of second connection blades 124 may each be inserted into each of the second insertion grooves 513 of the bobbin 500.

As the second connection blade 124 of the holding block 121B is inserted into the second insertion groove 513 of the bobbin 500, the bobbin 500 may be engaged with and supported by the holding block 121B. While the bobbin 500 is supported by the holding block 121B with the first connection blade 123 and the second connection blade 124 of the holding block 121B inserted into the first insertion groove 511 and the second insertion groove 513 of the bobbin 500, respectively, when the rotation block 122 is rotated, the bobbin 500 is rotated so that the electrode sheet 300 may be unwound from the bobbin 500.

### (sixth embodiment)

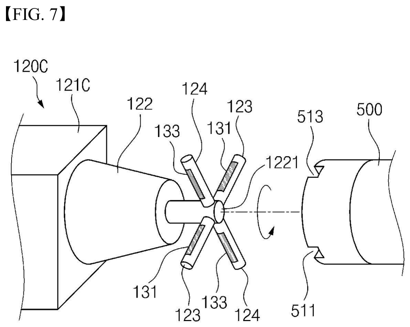

FIG. 7 is a perspective view illustrating a holding block 121C of a holder 120C according to exemplary embodiments of the present disclosure. Hereinafter, the holding block 121C of the holder 120C of FIG. 7 will be described focusing on differences from the holding block 121B of the holder 120B described with reference to FIG. 6.

Referring to FIG. 5 and FIG. 7, the holding block 121C may include a first contact pad 131 mounted on the first connection blade 123 and a second contact pad 133 mounted on the second connection blade 124.

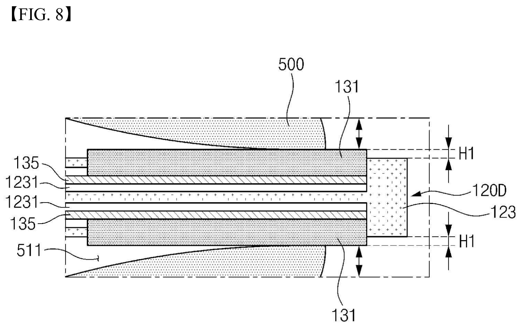

The first contact pad 131 may be accommodated in a hole (1231 of FIG. 8) of the first connection blade 123. When the first connection blade 123 is inserted into the first insertion groove 511 of the bobbin 500, the first contact pad 131 may be in close contact with a surface of the bobbin 500 defining the first insertion groove 511 of the bobbin 500 for the first connection blade 123. As the first contact pad 131 is in close contact with the bobbin 500, slip between the first connection blade 123 and the bobbin 500 may be prevented.

The second contact pad 133 may be accommodated in a hole of the second connection blade 124. When the second connection blade 124 is inserted into the second insertion groove 513 of the bobbin 500, the second contact pad 133 may be in close contact with a surface of the bobbin 500 defining the second insertion groove 513 of the bobbin 500 for the second connection blade 124. As the second contact pad 133 is in close contact with the bobbin 500, slip between the second connection blade 124 and the bobbin 500 may be prevented.

For example, the first contact pad 131 and the second contact pad 133 may include rubber, silicone, and/or polytetrafluoroethylene (PTFE).

### (seventh embodiment)

FIG. 8 is a perspective view illustrating a holder 120D according to exemplary embodiments of the present disclosure. Hereinafter, the holder 120D of FIG. 8 will be described focusing on differences from the holder 120C described with reference to FIG. 7.

Referring to FIG. 8, the holder 120D may include an actuator 135 that moves the first contact pad 131. The actuator 135 may move the first contact pad 131 to adjust a protrusion height H1 at which the first contact pad 131 protrudes from the first connection blade 123. The protrusion height H1 of the first contact pad 131 may vary according to the size of the first insertion groove 511 of the bobbin 500, and a friction force between the first contact pad 131 and the bobbin 500 may be adjusted by adjusting the protrusion height H1 of the first contact pad 131.

In addition, although not shown in the drawings, the holder 120D may include an actuator that moves the second contact pad 133. The actuator may move the second contact pad 133 to adjust a protrusion height at which the second contact pad 133 protrudes from the second connection blade 124. The protrusion height of the second contact pad 133 may vary according to the size of the second insertion groove 513 of the bobbin 500, and a friction force between the second contact pad 133 and the bobbin 500 may be adjusted by adjusting the protrusion height of the second contact pad 133.

According to the electrode manufacturing apparatus according to exemplary embodiments, since the electrode disposal process can be automated, productivity of the electrode disposal process can be improved, and safety issues of operators and accidents can be prevented.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. An electrode disposal apparatus, comprising:
a holder comprising a holding block configured to support a side portion of a bobbin on which an electrode sheet is wound and configured to rotate the bobbin such that the electrode sheet is unwound from the bobbin;
a cutter configured to cut a portion of the electrode sheet unwound from the bobbin; and
a disposal box accommodating segments of the electrode sheet cut by the cutter,
wherein the holding block comprises:
a rotation block; and
a first connection blade extending in a first direction perpendicular to a rotation axis of the rotation block and inserted into a first insertion groove of the bobbin.

2. The electrode disposal apparatus of claim 1, wherein the holding block further comprises:
a second connection blade extending in a second direction perpendicular to the rotation axis of the rotation block and different from the first direction and inserted into a second insertion groove of the bobbin.

3. The electrode disposal apparatus of claim 1, wherein the holding block further comprises:
a contact pad accommodated in a hole of the first connection blade and in contact with the bobbin.

4. The electrode disposal apparatus of claim 3, wherein the holder is configured to move the contact pad to adjust a height at which the contact pad protrudes from the first connection blade.

5. The electrode disposal apparatus of claim 3, wherein the contact pad comprises rubber.

6. The electrode disposal apparatus of claim 1, wherein the holder is configured to move the holding block between a working position and a standby position,
wherein at the working position, the holding block supports the bobbin, and
wherein at the standby position, the holding block is spaced apart from the bobbin.

7. The electrode disposal apparatus of claim 1, further comprising:
a scale coupled to the disposal box and configured to detect a weight of the disposal box.

8. The electrode disposal apparatus of claim 7, further comprising a transfer device configured to move the disposal box and the scale.

9. The electrode disposal apparatus of claim 1, further comprising:
a scale coupled to the disposal box and configured to detect a weight of the disposal box; and
a transfer device configured to move the disposal box and the scale,
wherein the transfer device is configured to move the disposal box and the scale to a disposal position when the weight of the disposal box detected by the scale exceeds a reference weight.

10. The electrode disposal apparatus of claim 1, further comprising a touch roll in contact with the electrode sheet wound on the bobbin.

11. The electrode disposal apparatus of claim 1, wherein the cutter comprises a support part supporting a portion of the electrode sheet unwound from the bobbin and a cutting knife configured to cut the electrode sheet while the support part supports the electrode sheet.
